# EUROPEAN PATENT SPECIFICATION

(11) **EP 2 149 615 B1**
(45) Date of publication and mention of the grant of the patent: **22.10.2014**
(21) Application number: 09425294.7
(22) Date of filing: 21.07.2009
(51) Int. Cl.: C21B 3/08, F27D 15/02, C22B 7/04, C22B 7/00, C04B 5/06

(54) **Equipment for the treatment of slag from electric furnaces**
Ausrüstung zur Behandlung von Schlacke aus Elektroöfen
Équipement pour le traitement de laitier provenant de fours électriques

(30) Priority: 25.07.2008 IT BS20080143
(43) Date of publication of application: 03.02.2010
(73) Proprietor: ASO Siderurgica S.r.l., 25035 Ospitaletto (BS) (IT)
(72) Inventor: Roberti, Roberto, 25035 Ospitaletto (BS) (IT)
(74) Representative: Sangiacomo, Fulvia

(56) References cited:
- EP-A- 0 162 182
- EP-A- 1 970 455
- JP-A- 2008 308 398

## Description

### Field of the Invention

The invention concerns the field of the steel industry and in particular regards equipment for the treatment of slag from electric furnaces.

### State of the Technique

In the steel industry the slag deriving from the smelting of raw materials is downloaded from the electric furnaces at the end of the smelting phase. For this purpose the furnace is provided with a door, for the so-called scorifying, by means of which the slag is made to flow into a collection tank or pot or to a collection area positioned at a lower level than the furnace, from where it is removed at the end of the smelting process or periodically by using mechanical means. The slag, which initially is in the smelted state, slowly solidifies inside the pot or in the collection area, agglomerating into blocks difficult to move and treat. For this reason an additional crushing operation is necessary, with the help of device, such as pneumatic hammers, to disgregate the material so as to be able to easily transport it to its final destination.

However, and evidently, this operation requires the use of additional labour and takes time, is laborious and costly to carry out.

Document EP-A-0 162 182 discloses a method and an apparatus for subdivision of and heat recovery from a liquid slag, comprising a rolling of the liquid slag between at least two cooling rolls of metal. However in this document is stated that the temperature of and the distance between the rolls is controlled such that a cohesive slag slab is obtained having a solidified surface layer and a melted central layer, the slab still being sufficiently plastic to be shapable, a shaping in conjunction with the rolling or after the same, of the slab into briquettes and a recovery of heat at least from the shaped briquettes, preferably after these have been separated from each other, via any suitable cooling means or medium.

### Objects and Summary of the Invention

An object of this invention is on the contrary to provide an equipment that enables rapid cooling and disaggregation of the slag already as it exits the electric furnace so as to facilitate collection and elimination, without having to carry out additional operations thus avoiding the inconveniences of the known technique.

A further object of the invention is to provide an equipment for the treatment of the slag directly associable with the scorifying door of each electric furnace.

Said objects and implicit advantages deriving from them are achieved in a system for the treatment of slag in iron and steel plants according to claim 1. Other particular aspects of the invention will become evident from the subsequent claims.

### Brief Description of the Drawings

The present invention will however be illustrated in greater detail in the course of the description made with reference to the enclosed indicative and non limiting drawings, in which:
Fig. 1 shows a view in perspective of the whole equipment;
Fig. 2 shows a vertical section that shows the essential components of the equipment; and

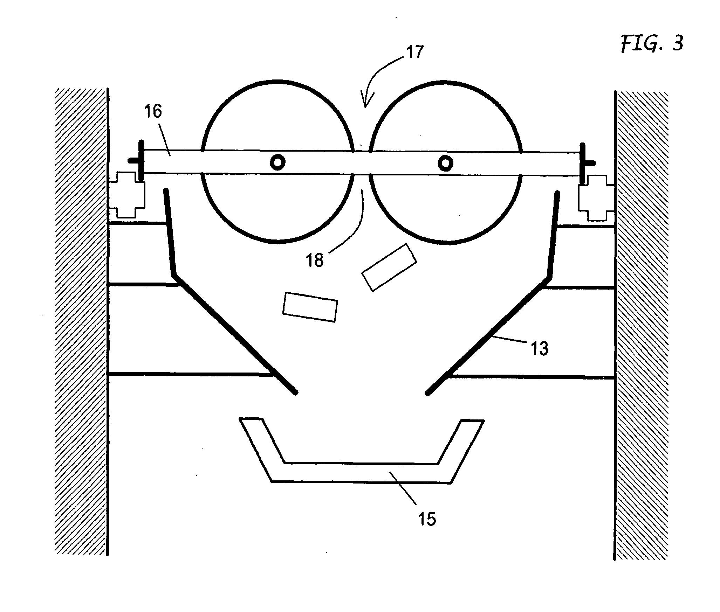

Fig. 3 shows an exemplifying diagram of the installation of the equipment.

### Detailed Description of the Invention

The equipment according to the invention is indicated globally with 10 and is designed to treat, as predicted, the slag 11 coming from the scorifying door of an electric furnace -not shown- of a steel plant. It basically comprises at least a pair of cylinders 12 located side by side, rotating on respective axes and positioned inside an enclosing structure 13 and between two head refractory plates 14. The enclosing structure 13 is like a hopper, open both at the upper towards the scorifying door of the furnace and at the bottom towards a tank below or collection channel 15.

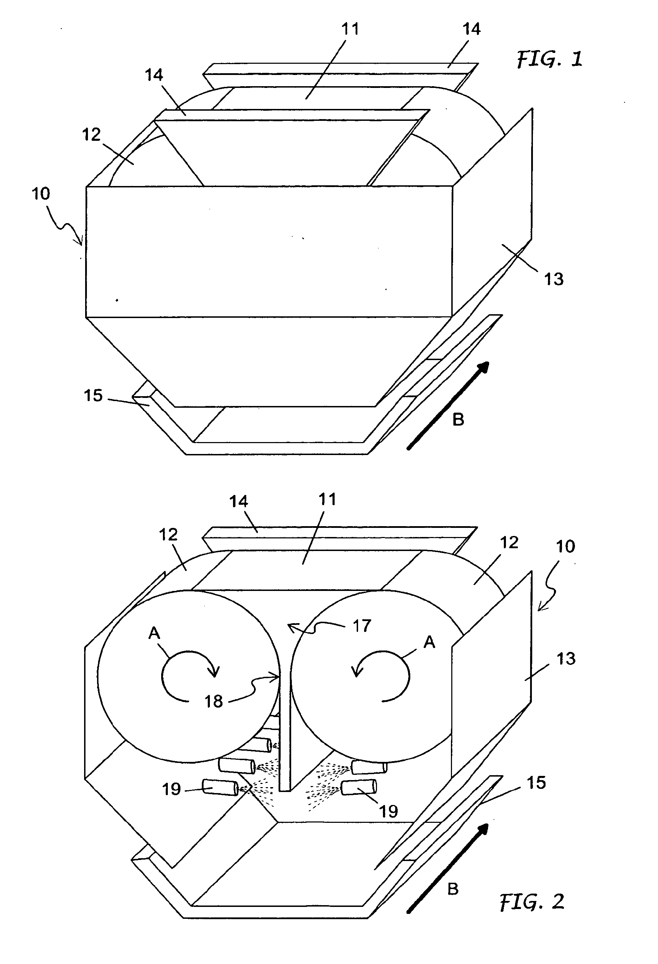

The rotating cylinders 12 can be mounted horizontally on supporting beams 16 (Fig. 2) and powered by a motor apparatus to turn in opposite directions according to the A arrows in Fig. 2. They are distanced to delimit between them and with the head refractory plates 14, an upper basin 17 to receive the slag to be treated, followed by a port 18 for the lamination and discharge of the slag into the collection tank 15 below.

The cylinders 12 can possibly have adjustable distances between centres to vary the capacity of the upper tank 17 according to requirements and the width of the port 18 for the lamination and discharge of the slag.

Below the cylinders 12, on opposite sides of the trajectory of the slag exiting from the lamination port 18, some nozzles 19 are positioned to deliver jets of compressed air towards the slag, said nozzles being preferably slanting downwards to avoid the slag being projected towards them.

The collection tank 15 is provided for removal of the treated slag according to the B arrows in Figs. 1 and 2, and for this purpose it can be the vibrating type or subject to pilgrim step movements.

In practise, the slag 11 arriving by exiting from the scorifying door of the furnace and which is collected in the upper basin 17, begins to cool already on contact with the cylinders, and consequently is laminated by passing through the port 18 defined by said cylinders to then be cooled where it is in contact with the jets of compressed air delivered by the nozzles 19.

Besides the cooling action the compressed air jets also carry out the role of disaggregation of the slag thanks to the fact that the latter, at the bottom, on exiting from the cylinders has a relatively thin thickness. The slag consequently becomes granulated and therefore downloaded as such into the tank to be basically and advantageously taken away without the need for other interventions and treatment.

Furthermore, the capacity of the slag to be treated can also be adjusted according to its composition, by conveniently varying the rotation speed of the two cylinders and the lamination port.

## Claims

1. Equipment for the treatment of slag coming from a tapping hole of an electric furnace of a metallurgical plant comprising in combination, inside a containment structure (10), means of receiving and lamination of the slag comprising at least a pair of parallel cylinders (12) operated to rotate and forming between them an upper collecting basin (17) followed by a port (18) of lamination, means for cooling and disaggregation of the laminated slag and means for collecting and evacuating the disaggregated slag, **characterized in that** said cooling and disaggregation means consist of nozzles (19) arranged on opposite sides of the laminated slag, at a level set between said rotating cylinders (12) and said collecting and evacuation means, in order to deliver compressed air jets toward the slag exiting from said port (18) of lamination.

2. Equipment according to claim 1, in which said nozzles are slanting downwards to avoid the slag being projected towards them.

3. Equipment according to claim 1 or 2, wherein the upper basin (17) and the port of lamination (18) are set by said cylinders (12) with the aid of two head refractory plates (14) associated with them.

4. Equipment according to any of the previous claims, wherein said collecting and evacuation means of the disaggregated slag consist of a tank (15) either vibrating or prone to "pilgrim" steps.

5. Equipment according to any of the previous claims, wherein the rotating cylinders (12) have adjustable distance between centres to vary the capacity of the upper collection basin and the amplitude of the port of lamination.

6. Equipment according to any of the previous claims, wherein the rotating speed of the cylinders is variable to vary the flow of the treated slag.

## Patentansprüche

1. Ausrüstung zur Behandlung von aus einem Abstichloch eines Elektroofens eines Hüttenwerkes kommender Schlacke, umfassend in Kombination Mittel in einer Behälterstruktur (10) zur Aufnahme und Laminierung der Schlacke, wobei die Mittel, die mindestens ein Paar von parallelen Zylindern (12) aufweisen, welche drehangetrieben werden und zwischen sich ein oberes Sammelbecken (17) bilden, gefolgt von einem Laminierspalt (18), Mittel zum Kühlen und Zersetzen der laminierten Schlacke und Mittel zum Sammeln und Entsorgen der zersetzten Schlacke, **dadurch gekennzeichnet, dass** die besagten Mittel zum Kühlen und Zersetzen aus Düsen (19) gebildet sind, die auf gegenüberliegenden Seiten der laminierten Schlacke auf einem Niveau zwischen den besagten drehenden Zylindern (12) und den besagten Mitteln zum Sammeln und Entsorgen angeordnet sind, um Druckluftstrahlen in Richtung der aus der besagten Laminierpalte (18) austretenden Schlacke zu senden.

2. Ausrüstung nach Anspruch 1, wobei die besagten Düsen schräg abwärts verlaufen, um zu verhindern, dass die Schlacke auf diese geschleudert wird.

3. Ausrüstung nach Anspruch 1 oder 2, wobei das obere Sammelbecken (17) und der Laminierspalt (18) durch die besagten Zylinder (12) eingestellt werden, mithilfe zweier ihnen zugeordneter feuerfester Kopfplatten (14).

4. Ausrüstung nach einem der vorangehenden Ansprüche, wobei die besagten Sammel- und Wegbringmittel der zersetzten Schlacke aus einem Tank (15) bestehen, der entweder vibrieren oder "Pilgerschritte" zulassen kann.

5. Ausrüstung nach einem der vorangehenden Ansprüche, wobei die rotierenden Zylinder (12) einen zwischen Mittelpunkten einstellbaren Abstand aufweisen, um das Fassungsvermögen des oberen Sammelbeckens und die Weite des Laminierspaltes zu variieren.

6. Ausrüstung nach einem der vorangehenden Ansprüche, wobei die Drehgeschwindigkeit der Zylinder variabel ist, um den Fluss der behandelten Schlacke zu ändern.

## Revendications

1. Équipement pour le traitement de laitier provenant d'un trou de coulée d'un four électrique d'une usine métallurgique comprenant en combinaison, dans une structure de confinement (10), des moyens de réception et de laminage du laitier comprenant au moins une paire de cylindres parallèles (12) actionnés en rotation et formant entre eux un bassin collecteur supérieur (17), suivie d'un orifice (18) de laminage, des moyens pour le refroidissement et la désagrégation du laitier laminé et des moyen pour collecter et évacuer le laitier désagrégé, **caractérisé en ce que** lesdites moyens de refroidissement et désagrégation sont composés par des buses (19) disposées sur des côtés opposés du laitier laminé, à un niveau situé entre lesdits cylindres rotatifs (12) et lesdites moyens de collecte et d'évacuation, afin de distribuer des jets d'air comprimé vers le laitier sortant dudit orifice (18) de laminage.

2. Équipement selon la revendication 1, dans lequel lesdites buses sont inclinées vers le bas pour éviter que le laitier soit projeté vers eux.

3. Équipement selon la revendication 1 ou 2, dans lequel le bassin supérieure (17) et l'orifice de laminage (18) sont déterminés par lesdits cylindres (12) avec deux plaques réfractaires (14) en tête, qui sont leurs associés.

4. Équipement selon l'une quelconque des revendications précédentes, dans lequel lesdits moyens de collecte et d'évacuation du laitier désagrégé sont constitués d'une cuve (15) vibrante ou sujette "à pas de pèlerin".

5. Équipement selon l'une quelconque des revendications précédentes, dans lequel les cylindres rotatifs (12) ont la distance entre les centres qui peut être réglée pour changer la capacité du bassin collecteur supérieur et l'ampleur de l'orifice de laminage.

6. Équipement selon l'une quelconque des revendications précédentes, dans lequel la vitesse de rotation des cylindres est variable pour faire varier le débit du laitier traité.
